Europäisches Patentamt

European Patent Office

Office européen des brevets

(19)

(11)  EP 0 581 172 B1

(12)  **EUROPÄISCHE PATENTSCHRIFT**

(45) Veröffentlichungstag und Bekanntmachung des
Hinweises auf die Patenterteilung:
**02.10.1996  Patentblatt 1996/40**

(51) Int Cl.6: **H02M 3/337**, G05F 1/565,
H02H 9/02

(21) Anmeldenummer: **93111632.1**

(22) Anmeldetag: **21.07.1993**

(54)  **Verfahren zur Strombegrenzung sowie Anordnung**

Method for limiting current and arrangement

Procédé pour limitation de courant et arrangement

(84) Benannte Vertragsstaaten:
**DE FR GB IT NL**

(30) Priorität: **31.07.1992  DE 4225335**

(43) Veröffentlichungstag der Anmeldung:
**02.02.1994  Patentblatt 1994/05**

(73) Patentinhaber: **ROBERT BOSCH GMBH
70442 Stuttgart (DE)**

(72) Erfinder: **Ohms, Franz, Dipl.-Ing.
D-74420 Oberrot (DE)**

(56) Entgegenhaltungen:
**EP-A- 0 203 270         DE-A- 3 615 176
US-A- 5 095 416**

EP 0 581 172 B1

**Beschreibung**

Die Erfindung geht aus von einem Verfahren gemäß dem Oberbegriff des Patentanspruchs 1 und von einer Anordnung gemäß den Oberbegriffen der Ansprüche 4 und 5.

Ein solches Verfahren bzw. Anordnung ist bekannt aus der US-A-5, 095,416. Bei diesem Verfahren wird jeweils der Strom in den Gegentaktzweigen des Gegentaktwandlers gemessen und in Abhängigkeit der gemessenen Ströme werden Steuersignale für die Einschaltzeiten der Gegentaktschalter gewonnen. Wird ein solcher Gegentaktwandler über einen Vorregler betrieben, insbesondere über einen Boostregler, ist bei einem Fehlerfall, z.B. Kurzschluß, im Ausgangskreis eine Strombegrenzung nicht immer auf einfache Weise, z.B. wie bei einem Buckregler, möglich.

Aufgabe der Erfindung ist es ausgehend vom Oberbegriff des Patentanspruchs 1 ein Verfahren zur Strombegrenzung anzugeben, welches eine sichere Strombegrenzung auf einfache Weise ermöglicht. Außerdem soll eine sichere Strombegrenzungsanordnung für einen Gegentaktwandler, welcher über einen Vorregler betreibbar ist, aufgezeigt werden. Diese Aufgabe wird bezüglich des Verfahrens durch die Maßnahmen des Patentanspruchs 1 und bezüglich der Anordnung durch die Merkmale des Patentanspruchs 4 oder 5 gelöst. Die weiteren Ansprüche zeigen vorteilhafte Weiterbildungen des Verfahrens bzw. der Anordnung auf.

Die Erfindung geht von der Erkenntnis aus, daß bei einem Boostregler als Vorregler des Gegentaktwandlers keine einfache Strombegrenzung wie etwa bei einem Buckregler möglich ist. Die Erfindung zeigt einen Weg auf wie Fehlerfunktionen bei einer Stromversorgung schnell und sicher erkannt werden können und Gegenmaßnahmen schnell eingeleitet werden können. Die Erfindung eignet sich insbesondere für Anwendungsfälle, wo herkömmliche Strombegrenzungsmaßnahmen, z.B. Einschleifen von Induktivitäten, versagen oder nicht sicher genug sind. Die erfindungsgemäße Lösung benötigt keine aufwendigen Einrichtungen in den Gegentaktkreisen des Gegentaktwandlers, wie z.B. Stromwandler, Integrierglieder, Rücksetzeinrichtungen sowie zugehörige Steuereinrichtungen.

Anhand der Figuren werden Ausführungsbeispiele der Erfindung näher erläutert. Es zeigen

Fig. 1 ein Prinzipschaltbild einer Strombegrenzung bei einem Gegentaktwandler mit vorgeschaltetem Vorregler,
Fig. 2 Signalverläufe ausgewählter Steuersignale und
Fig. 3 ein weiteres Ausführungsbeispiel einer Strombegrenzung.

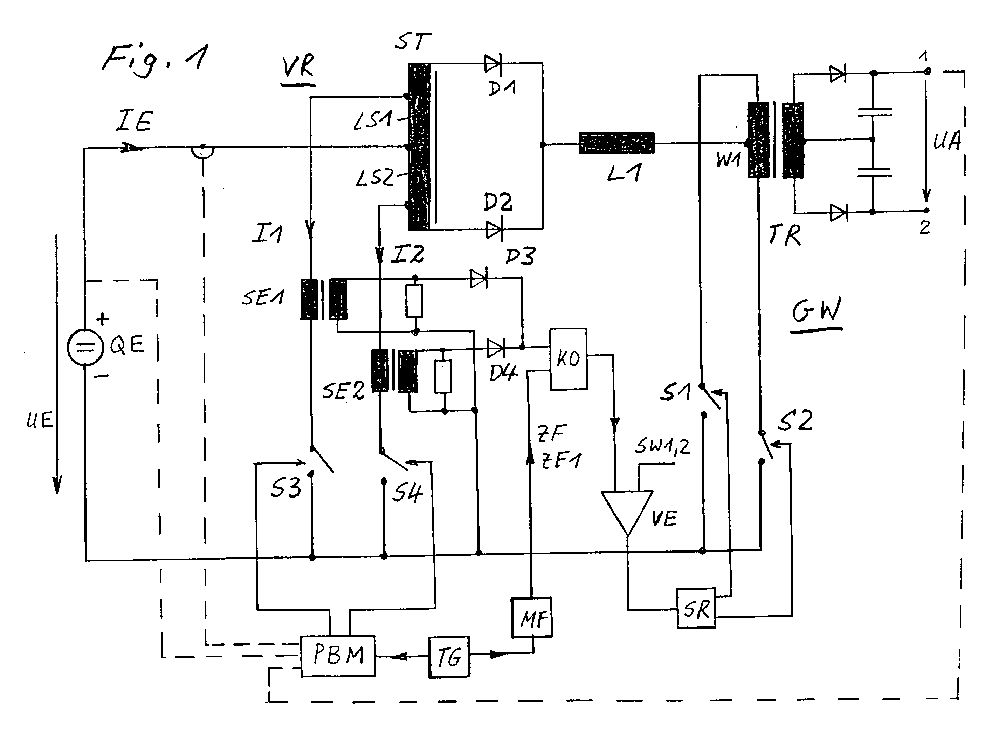

In Fig. 1 ist ein von einer Eingangsgleichspannungsquelle QE gespeister Vorregler VR dargestellt, dem ein Parallel-Gegentaktgleichspannungswandler GW nachgeschaltet ist. Der Vorregler VR ist als Gegentakt-Boostregler (Hochsetzsteller) ausgebildet, dessen zwei Stellglieder, hier durch die Schalter S3 und S4 symbolisiert über einen Spartransformator ST an die Eingangsgleichspannungsquelle QE angeschlossen sind. Im dargestellten Ausführungsbeispiel ist der Wicklungsmittelpunkt des Spartransformators ST mit dem Pluspol der Eingangsgleichspannungsquelle QE verbunden. Zwischen symmetrisch zum Wicklungsmittelpunkt gelegenen Anzapfungen des Spartransformators ST und dem Minuspol ist jeweils einer der Schalter S3 bzw. S4 angeordnet. Somit sind die Schalter S3 und S4 jeweils über eine Teilinduktivität LS1 bzw. LS2 des Sparübertragers ST mit der Eingangsgleichspannungsquelle verbunden. Den Sekundärkreis des Hochsetzstellers bilden die Gleichrichter D1 und D2, die jeweils gleichsinnig gepolt an die Wicklungsenden des Spartransformators ST angeschlossen sind.

Alternativ zu dieser Ausführung können auch die Schalter S3 und S4 an den Wicklungsenden des Spartransformators ST angeschlossen sein und die Gleichrichter D1 und D2 an die Anzapfungen des Spartransformators ST. Die Gleichrichter D1 und D2 sind kathodenseitig miteinander verbunden und über die Induktivität L1 an den Mittelabgriff der Primärwicklung W1 des Transformators TR für den Gegentaktwandler GW angeschlossen. Die Wicklungsenden dieser Primärwicklung W1 sind jeweils über einen der Gegentaktschalter S1 bzw. S2 mit dem Minuspol der Eingangsgleichspannungsquelle QE verbunden. An die Ausgangsklemmen ist eine Last anschließbar.

Zur Strombegrenzung wird der Stromanstieg oder die Stromamplitude der Energieaufnahmeströme I1 und I2 des Vorreglers VR in einem vorgegebenen Zeitfenster ZF erfasst und mit einem vorgegebenen Schwellwert SW1 bzw. SW2 verglichen.

Das Zeitfenster ZF wird direkt beim Einschalten erzeugt. Diese Vorgehensweise geht von der Tatsache aus, daß ein Boostregler den Ausgangsstrom nicht begrenzen kann, wenn die Ausgangsspannung infolge erhöhter Belastung (Kurzschluß am Ausgang) unter die Eingangsspannung sinken will. Der sogenannte "duty cycle" D (Tastverhältnis des Schaltreglers) im Strombegrenzungsmode wird dann nahezu D=O, da der erfaßte Strom sofort die entsprechende Schwelle überschritten hat.

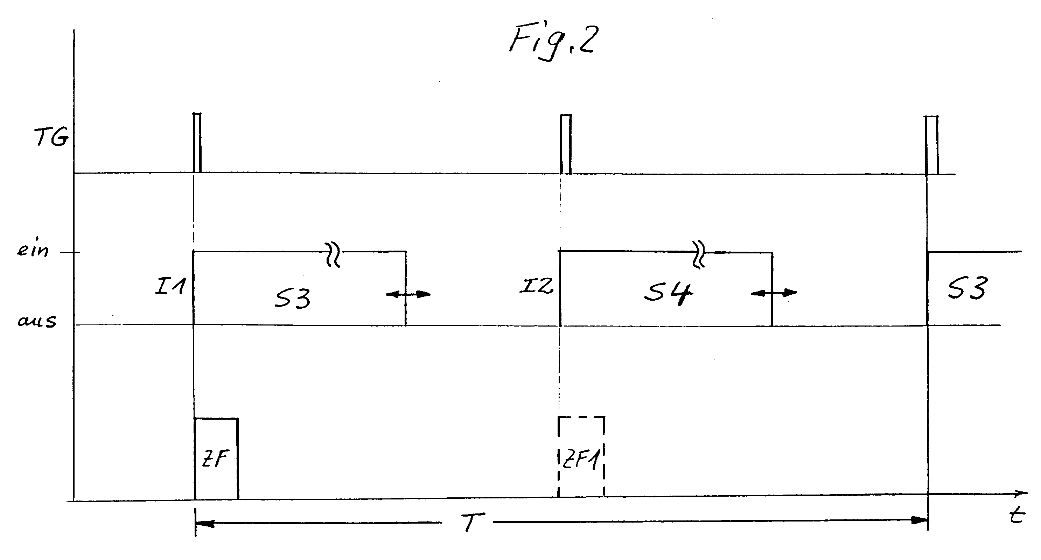

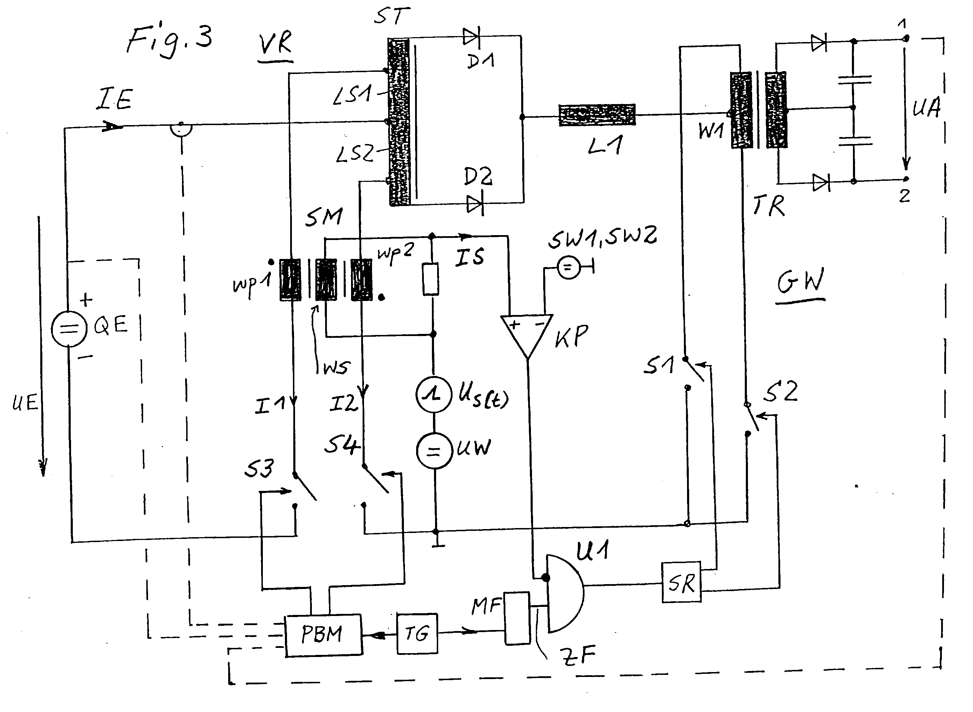

Wenn der Stromanstieg/die Stromamplitude der Energieaufnahmeströme innerhalb des Zeitfensters ZF größer ist als der vorgegebene Schwellwert SW1, werden die Schalter S1 und S2 des Gegentaktwandlers GW über ihre Steuereinrichtung SR abgeschaltet. Zur Realisierung dieser Funktion sind die Stromsensoren SE1 und SE2 in Form von Strommeßwandlern vorgesehen, die die Ströme I1 und I2 erfassen (Fig. 2). Die mit den Sensoren SE1 und SE2 ausgewerteten energieaufnahmestromproportionalen Signale werden jeweils über einen Gleichrichter D3 bzw. D4 geführt und über einen Summierpunkt als Summensignal IS einem Eingang einer Koinzidenzschaltung KO zugeführt. Anstelle zweier Strommeßwandler kann auch ein Strommeßwandler SM mit zwei Primärwicklungen wp1 und wp2 zur Erfassung der Ströme I1 und I2 vorgesehen sein. (Fig. 3). Bei dieser Realisierung ist an der Sekundärwicklung ws schon das Summensignal IS abgreifbar, so daß gegenüber der Ausgestaltung nach Fig. 1 eine Gleichrichterschaltung entbehrlich ist. Der andere Eingang der Koinzidenzschaltung KO ist mit dem Zeitfenstersignal ZF beaufschlagt. Das Zeitfenstersignal ZF (Fig. 2) wird beispielsweise durch ein Monoflop MF erzeugt, welches jeweils zu Beginn eines neuen Schaltzyklus für die Schalter S3 und S4 gestartet wird. Vorteilhafterweise wird das Monoflop MF vom Taktgenerator TG, welcher auch den Pulsbreitenmodulator PBM zur Festlegung der Leitendzeiten der Schalter S3 und S4 steuert, getriggert. Durch diese Maßnahme ist sichergestellt, daß der Beginn des Zeitfensters ZF streng synchron zum Beginn eines Schaltzyklus der Schalter S3 und S4 mit der Periodendauer T ist (Fig. 2).

Der Pulsbreitenmodulator PBM kann in Abhängigkeit der Ausgangsspannung UA, dem Eingangsstrom IE und/oder der Eingangsspannung UE gesteuert werden. Eine besonders vorteilhafte Steuerung dieser Art ist der US 5,001,413, Fig. 2, entnehmbar. Die Koinzidenzschaltung KO ist so beschaffen, daß sie die Stromverläufe von den Sensoren SE1 und SE2 unverfälscht innerhalb des Zeitfensters ZF durchläßt und sonst unterdrückt. Die der Koinzidenzschaltung KO nachgeschaltete Vergleichseinrichtung VE vergleicht die ausgewerteten Energieaufnahmeströme mit einem vorgegebenen Schwellwert SW1 und schaltet die Schalter S1 und S2 über einen Eingriff in ihre Steuereinrichtung SR ab, wenn der Stromanstieg innerhalb des Zeitfensters ZF den Schwellwert SW1 übersteigt. Koinzidenzschaltung KO und Vergleichseinrichtung VE können auch in einer Baueinheit zusammengefasst sein. Das Zeitfenster ZF wird vorzugsweise sehr kurz, z.B. 1,5 µs, im Vergleich zur Periodendauer von z.B. 50 µs gewählt. Diese Dimensionierung beruht auf der Erkenntnis, daß bei einem Fehler, z.B. einem lastseitigen Kurzschluß, der Strom sehr schnell stark ansteigt und nur dieser Fehlerfall zu einer Abschaltung der Gegentaktschalter S1 und S2 führen soll, um die Verfügbarkeit so groß wie möglich zu halten. Allmählich ansteigende Ströme, die insbesondere bei zulässigen Lastwechseln auftreten, werden durch die Induktivität L1 in ihrer Höhe begrenzt, so daß in diesen Fällen kein Abschalten der Gegentaktschalter S1 und S2 erfolgen muß, sondern nur die Einschaltzeiten der Schalter S3 und S4 nachgeregelt werden müssen. Die Schalter S1 und S2 werden normalerweise mit festen Schaltzeiten und vorteilhafterweise mit einer Lückzeit betrieben, die so groß bemessen wird, daß das Resonanzgebilde, bestehend aus dem Gegentaktwandler einschließlich Streukapazitäten oder zusätzlichen Kapazitäten - bei Ausbildung als Resonanzwandler - selbständig von einer Polarität auf die andere Polarität umschwingen kann (vgl. hierzu insbesondere EP 77 958 B1).

Alternativ dazu können die Schalter S1 und S2 auch pulsbreiten- oder pulsfrequenzgeregelt werden, gegebenenfalls in Abstimmung mit der Regelung der Schalter S3 und S4. Damit nicht sehr kurzzeitige Stromanstiege, z.B. Schaltspitzen im Nanosekundenbereich, zu einem ungewollten Abschalten der Schalter S1 und S2 führen, ist es vorteilhaft den Stromanstieg in einem weiteren Zeitfenster ZF1 (in Fig. 2 gestrichelt) zu erfassen und erst dann die Schalter S1 und S2 des Gegentaktwandlers GW abzuschalten, wenn in beiden Zeitfenstern ZF und ZF1 der vorgegebene Schwellwert SW1 überschritten wird. Um diese Ausgestaltung zu realisieren, kann die Tatsache des Überschreitens des Schwellwertes SW1 im ersten Zeitfenster ZF in einem Halteglied zwischengespeichert werden und in einer logischen UND-Schaltung, welche der Vergleichseinrichtung VE ebenso wie das Halteglied zweckmäßigerweise nachgeschaltet ist, mit der Überschreitung im zweiten Zeitfenster ZF1 verknüpft werden. Vorteilhafterweise wird das zweite Zeitfenster ZF1 ebenfalls durch den Taktgenerator TG oder ein davon abgeleitetes geteiltes Signal getriggert. Das zweite Zeitfenster ZF1 kann zu Beginn der Leitendphase des Schalters S4 gestartet werden, wie in Fig. 2 dargestellt, oder zu Beginn des nächsten Schaltzyklus der beiden Schalter S3 und S4.

In einer weiteren Ausgestaltung kann das Abschalten der Schalter S1 und S2 auch erst dann bewirkt werden, wenn die Summe der Stromanstiege in den beiden Zeitfenstern ZF und ZF1 einen vorgegebenen weiteren Schwellwert SW2 überschreitet, wobei dieser Schwellwert SW2 vom Schwellwert SW1 beispielsweise nach oben abweichen kann. Damit die Strombegrenzung in der Anfangsphase, z.B. beim Zuschalten der Eingangsgleichspannungsquelle QE, zuverlässig arbeitet - in der Anfangsphase fließen üblicherweise höhere Ströme als im Dauerbetrieb, da kapazitive Elemente erst geladen werden müssen - kann der Vorregler VR mit einer Soft-Start Einschaltvorrichtung ausgerüstet sein.

Eine weitere Variante der Erfindung besteht darin, beim Einschalten des Gegentaktgleichspannungswandlers, z.B. bei Zuschalten der Hochspannung des Wanderfeldröhrenverstärkers, die Strombegrenzung über die Zeitfenstersteuerung für eine Wartezeit von z. B. 1 bis 2 msec unwirksam zu schalten. Diese Funktion kann ebenfalls durch ein triggerbares Monoflop und einen Eingriff in die Signalverknüpfung, z.B. durch einen weiteren Eingang des UND-Gliedes U1, realisiert werden.

Nach einem Abschalten der Gegentaktschalter S1 und S2 kann nach einer vorgegebenen Erholzeit von z. B. 100 ms ein neuer Einschaltversuch unternommen werden, welcher z.B. über ein Zeitglied in der Steuereinrichtung SR ausgelöst werden kann. Sollte in einer solchen Einschaltphase die Vergleichseinrichtung VE sofort ansprechen, liegt höchstwahrscheinlich ein Dauerfehler vor. In diesem Falle ist es zweckmäßig keine neuen Einschaltversuche zu unternehmen.

Der Vorregler VR wurde bisher anhand eines Gegentakt-Boostreglers erläutert. Natürlich kann für den Vorregler auch ein Eintaktregler oder ein andersartiger Regler (andere Schaltreglertopologie) verwendet werden, ohne das Prinzip der Erfindung zu verlassen. Die Erfindung eignet sich vorteilhaft zur Stromversorgung von Wanderfeldröhrenverstärkern in Satelliten, mit dem Mainbus als Eingangsgleichspannungsquelle.

Ein weiteres Ausführungsbeispiel für die Strombegrenzung zeigt Fig. 3. In Abweichung zu Fig. 1 wird das von den Strömen I1 und I2 abgeleitete Summensignal IS nicht einer Koinzidenzschaltung KO zugeführt, sondern dem invertierenden Eingang eines Komparators KP zusammen mit zwei weiteren Signalen, nämlich einem Sägezahnsignal $U_{s(t)} = \hat{U}_{sz} + k \cdot UE) \frac{t}{T}$ und einem Gleichspannungssignal UW, dessen Höhe proportional zur Höhe der Einganggspannung UE gewählt ist. Der nichtinvertierende Eingang des Komparators KP ist mit dem Schwellwert SW1 bzw. SW2 beaufschlagt. Der Ausgang des Komparators KP ist mit dem negierenden Eingang eines UND-Gliedes U1 verbunden, das das Zeitfenster ZF mit dem invertierten Komparatorausgangssignal verknüpft. Der Ausgang des UND-Gliedes U1 ist zur Steuereinrichtung SR der Schalter S1 und S2 geführt. Wie beim Ausführungsbeispiel gemäß Fig. 1 werden die Schalter S1 und S2 abgeschaltet, wenn durch den Anstieg des Stromes I1 und/oder des Stromes I2 der entsprechende Schwellwert überschritten wird.

## Patentansprüche

1. Verfahren zur Strombegrenzung bei einem Gegentaktgleichspannungswandler (GW), welcher über einen getakteten Vorregler (VR) betrieben wird, gekennzeichnet durch folgende Maßnahmen:

   - der/die Energieaufnahmestrom/ströme des Vorreglers (VR) wird/werden hinsichtlich seines/ihres Anstiegs und/oder Amplitude erfaßt,

   - wenn der Stromanstieg/die Stromamplitude in mindestens einem vorgegebenen Zeitfenster (ZF, ZF1), dessen Beginn jeweils synchron zum Beginn eines Schaltzyklus des Vorreglers (VR) gestartet wird und dessen Länge kürzer gewählt ist als die Einschaltdauer eines Vorregler-Schalters (S3, S4) während eines Schaltzyklus, einen vorgegebenen Schwellwert (SW1, SW2) überschreitet, wird der Gegentaktgleichspannungswandler (GW) abgeschaltet.

2. Verfahren nach Anspruch 1, dadurch gekennzeichnet, daß der Vorregler (VR) als Schaltregler betrieben wird.

3. Verfahren nach Anspruch 1 oder 2, dadurch gekennzeichnet, daß als Kriterium für das Abschalten des Gegentaktgleichspannungswandlers (GW) mindestens zwei aufeinanderfolgende Zeitfenster (ZF, ZF1) herangezogen werden und ein Abschalten des Gegentaktgleichspannungswandlers (GW) erst dann vorgenommen wird, wenn in beiden Zeitfenstern (ZF, ZF1) ein vorgegebener Schwellwert (SW1) überschritten wird oder wenn die Summe der Stromanstiege/Stromamplituden in den beiden Zeitfenstern (ZF, ZF1) einen vorgegebenen Schwellwert (SW2) überschreitet.

4. Strombegrenzungsanordnung für einen Gegentaktgleichspannungswandler (GW), welcher über einen getakteten Vorregler (VR) betreibbar ist, gekennzeichnet durch folgende Baugruppen:

   - mindestens einen Stromsensor (SE) zur Erfassung des/der Energieaufnahmestromes/ströme des Vorreglers (VR),

   - eine Koinzidenzschaltung (KO) zur Auswertung des/der erfaßte/n Energieaufnahmestromes/ströme innerhalb eines vorgegebenen Zeitfensters (ZF), dessen Beginn jeweils synchron zum Beginn eines Schaltzyklus des Vorreglers (VR) gestartet wird und dessen Länge kürzer gewählt ist als die Einschaltdauer eines Vorregler-Schalters (S3, S4) während eines Schaltzyklus,

   - eine Vergleichseinrichtung (VE) zum Vergleich des/der ausgewerteten Energieaufnahmestromes/ströme mit einem vorgegebenen Schwellwert (SW1, SW2) und zur Aufbereitung eines Sperrsignals für die Schalter (S1, S2) des Gegentaktgleichspannungswandlers (GW), wenn der Schwellwert (SW1, SW2) überschritten wird.

5. Strombegrenzungsanordnung für einen Gegentaktgleichspannungswandler (GW), welcher über einen getakteten Vorregler (VR) betreibbar ist, gekennzeichnet durch folgende Baugruppen:

   - mindestens einen Stromsensor (SE) zur Erfassung des/der Energieaufnahmestromes/ströme des Vorreglers (VR),

   - einen Komparator (KP) zum Vergleich des/der Energieaufnahmestromes/ströme mit einem vorgegebenen Schwellwert (SW1, SW2),

   - einer UND-Verknüpfungsschaltung (U1) zur Verknüpfung des Ausgangssignals des Komparators (KP) mit einem Zeitfenstersignal (ZF), dessen Beginn jeweils synchron zum Beginn eines Schaltzyklus des Vorreglers (VR) gestartet wird und dessen Länge kürzer gewählt ist als die Einschaltdauer eines Vorregler-Schalters (S3, S4) während eines Schaltzyklus,

- einer Wirkverbindung vom Ausgang der UND-Verknüpfungsschaltung zur Steuereinrichtung (SR) der Schalter (S1, S2) des Gegentaktgleichspannungswandlers (GW) für die Erzeugung eines Sperrsignals.

6. Strombegrenzungsanordnung nach Anspruch 4 oder 5, dadurch gekennzeichnet, daß der Vorregler (VR) als Gegentakt-Boostregler mit einem Spartransformator (ST) im Eingangskreis ausgebildet ist.

7. Strombegrenzungsanordnung nach Anspruch 6, dadurch gekennzeichnet, daß in den Gegentaktzweigen des Boostreglers jeweils ein Stromsensor (SE1),SE2) vorgesehen ist und daß die Ausgangskreise der Stromsensoren (SE1, SE2) im Sinne einer Signalsummierung miteinander verknüpft sind.

8. Strombegrenzungsanordnung nach einem der Ansprüche 4 bis 7, dadurch gekennzeichnet daß der Vorregler (VR) mit einer Soft-Start Einschaltvorrichtung ausgerüstet ist.

9. Strombegrenzungsanordnung nach einem der Ansprüche 4 bis 7, dadurch gekennzeichnet, daß Mittel zur Unterdrückung der Strombegrenzung während der Einschaltphase des Gegentaktgleichspannungswandlers (GW) vorgesehen sind.

10. Strombegrenzungsschaltung nach einem der Ansprüche 4 bis 9, dadurch gekennzeichnet, daß zwischen dem Ausgang des Vorreglers (VR) und dem Eingang des Gegentaktgleichspannungswandlers (GW) eine Induktivität (L1) vorgesehen ist.

11. Strombegrenzungsanordnung nach einem der Ansprüche 4 bis 10, dadurch gekennzeichnet, daß die Zeit der Abschaltung des Gegentaktgleichspannungswandlers (GW) länger bemessen ist als die Zeit für einen Schaltzyklus des Gegentaktgleichspannungswandlers (GW).

**Claims**

1. Current limiting method in a push-pull DC-DC converter (GW) which is operated via a clocked preregulator (VR), characterized by the following measures:

- the energy consumption current/currents of the preregulator (VR) is/are detected with regard to its/their rise and/or amplitude,

- the push-pull DC-DC converter (GW) is switched off when, in at least one prescribed time window (ZF, ZF1) which respectively starts synchronously with the start of an operating cycle of the preregulator (VR) and whose length is selected to be shorter than the on period of a preregulator switch (S3, S4) during an operating cycle the current rise/current amplitude exceeds a prescribed threshold value (SW1, SW2).

2. Method according to Claim 1, characterized in that the pregulator (VR) is operated as a switching controller.

3. Method according to Claim 1 or 2, characterized in that at least two successive time windows (ZF, ZF1) are used as criterion for switching off the push-pull DC-DC converter (GW), and switching off the push-pull DC-DC converter (GW) is not undertaken until a prescribed threshold value (SW1) is exceeded in the two time windows (ZF, ZF1) or until the sum of the current rises/current amplitudes in the two time windows (ZF, ZF1) exceeds a prescribed threshold value (SW2).

4. Current limiting arrangement for a push-pull DC-DC converter (GW) which can be operated via a clocked preregulator (VR), characterized by the following modules:

- at least one current sensor (SE) for detecting the energy consumption current/currents of the preregulator (VR),
- a coincidence circuit (KO) for evaluating the detected energy consumption current/currents within a prescribed time window (ZF) which respectively starts synchronously with the start of an operating cycle of the preregulator (VR) and whose length is selected to be shorter than the on period of a preregulator switch (S3, S4) during an operating cycle,
- a comparator (VE) for comparing the evaluated energy consumption current/currents with a prescribed threshold value (SW1, SW2) and for conditioning a blocking signal for the switches (S1, S2) of the push-pull DC-DC converter (GW) when the threshold value (SW1, SW2) is exceeded.

5. Current limiting arrangement for a push-pull DC-DC converter (GW) which can be operated via a clocked preregulator (VR), characterized by the following modules:

- at least one current sensor (SE) for detecting the energy consumption current/currents of the preregulator (VR),

- a comparator (KP) for comparing the energy consumption current/currents with a prescribed threshold value (SW1, SW2),
- an AND logic circuit (U1) for combining the output signal of the comparator (KP) with a time-window signal (ZF) which respectively starts synchronously with the start of an operating cycle of the preregulator (VR) and whose length is selected to be shorter than the on period of a preregulator switch (S3, S4) during an operating cycle,
- an action connection from the output of the AND logic circuit to the control device (SR) of the switches (S1, S2) of the push-pull DC-DC converter (GW) for generating a blocking signal.

6. Current limiting arrangement according to Claim 4 or 5, characterized in that the preregulator (VR) is constructed as a push-pull boost regulator with an autotransformer (ST) in the input circuit.

7. Current limiting arrangement according to Claim 6, characterized in that a current sensor (SE1, SE2) is respectively provided in the push-pull branches of the boost regulator, and in that the output circuits of the current sensors (SE1, SE2) are linked to one another for the purpose of signal summation.

8. Current limiting arrangement according to one of Claims 4 to 7, characterized in that the preregulator (VR) is equipped with a soft-start closing device.

9. Current limiting arrangement according to one of Claims 4 to 7, characterized in that means are provided for suppressing current limiting during the switch-on phase of the push-pull DC-DC converter (GW).

10. Current limiting circuit according to one of Claims 4 to 9, characterized in that an inductor (L1) is provided between the output of the preregulator (VR) and the input of the push-pull DC-DC converter (GW).

11. Current limiting arrangement according to one of Claims 4 to 10, characterized in that the time for switching off the push-pull DC-DC converter (GW) is dimensioned to be longer than the time for an operating cycle of the push-pull DC-DC converter (GW).

**Revendications**

1. Procédé pour limiter l'intensité d'un courant dans un convertisseur de tension continue symétrique (GW) entraîné par un pré-régleur cadencé (VR), caractérisé par,

les moyens suivants :

- le ou les courants d'énergie du pré-régleur (VR) sont détectés quant à leur montée et/ou amplitude,
- lorsque la montée/amplitude du courant dans au moins une fenêtre de temps (ZF, ZF1) prédéterminé dont le début est démarré en synchronisme avec le début d'un cycle de commutation du pré-régleur (VR) et dont la longueur est inférieure à la durée de fermeture du commutateur pré-régleur (S3, S4) pendant un cycle de commutation, dépasse un seuil prédéterminé (SW1, SW2), on coupe le convertisseur de tension continue symétrique (GW).

2. Procédé selon la revendication 1, caractérisé en ce que, le pré-régleur (VR) est un régulateur de commutation.

3. Procédé selon la revendication 1 ou 2, caractérisé en ce que, le critère de coupure du convertisseur de tension continue symétrique (GW) est rapporté à au moins deux fenêtres de temps successives (ZF, ZF1) et le convertisseur de tension continue symétrique (GW) n'est coupé que si, dans les deux fenêtres de temps (ZF, ZF1), on dépasse un seuil prédéterminé (ZW1) ou si la somme de la montée amplitude du courant dans les deux fenêtres de temps (ZF, ZF1) dépasse un seuil prédéterminé (SW2).

4. Dispositif de limitation de courant pour un convertisseur de tension continue symétrique (GW) entraîné par un pré-régleur cadencé (VR), caractérisé par, les éléments suivants :

- au moins un capteur de courant (SE) pour détecter le ou les courants d'énergie du pré-régleur (VR),
- un circuit de coïncidence (KO) pour exploiter le ou les courants d'énergie détectés dans une fenêtre de temps prédéterminée (ZF) dont le début est démarré respectivement en synchronisme avec le début d'un cycle de commutation du pré-régleur (VR) et dont la longueur est inférieure à la durée de fermeture d'un commutateur de pré-régleur (S3, S4) pendant un cycle de commutation,
- une installation de comparaison (VE) pour comparer le ou les courants d'énergie exploités, à un seuil prédéterminé (SW1, SW2), et pour préparer un signal de blocage des commutateurs (S1, S2) du convertisseur de tension continue symétrique (GW) lorsqu'on dépasse le seuil (SW1, SW2).

5. Dispositif de limitation de courant d'un convertisseur de tension continue symétrique (GW) entraîné par un pré-régleur cadencé (VR),
caractérisé par,
les éléments suivants :

- au moins un capteur de courant (SE) pour détecter le ou les courants d'énergie du pré-régleur (VR),
- un comparateur (KP) pour comparer le ou les courants d'énergie, à un seuil prédéterminé (SW1, SW2),
- un circuit de combinaison ET (U1) pour combiner le signal de sortie du comparateur (KP) à un signal de fenêtre de temps (ZF) dont le début est démarré en synchronisme avec le début d'un cycle de commutation du pré-régleur (VR), et dont la longueur est choisie inférieure à la durée de fermeture d'un commutateur de pré-régleur (S3, S4) pendant un cycle de commutation,
- une liaison de coopération entre la sortie du circuit de combinaison ET et l'installation de commande (SR) du commutateur (S1, S2) du convertisseur de tension continue symétrique (GW) pour générer un signal de blocage.

6. Dispositif de limitation de courant selon la revendication 4 ou 5,
caractérisé en ce que, le pré-régleur (VR) est un régulateur amplificateur symétrique avec un transformateur économique (ST) dans le circuit d'entrée.

7. Dispositif de limitation de courant selon la revendication 6,
caractérisé en ce que, dans les branches symétriques du régulateur amplificateur, il est prévu chaque fois un capteur de courant (SE1, SE2), et les circuits de sortie des capteurs de courant (SE1, SE2) sont combinés dans le sens d'une addition des signaux.

8. Dispositif de limitation de courant selon l'une des revendications 4 à 7,
caractérisé en ce que, le pré-régleur (VR) est équipé d'un dispositif de branchement de démarrage en douceur.

9. Dispositif de limitation de courant selon l'une des revendications 4 à 7,
caractérisé par,
des moyens pour supprimer la limitation de courant pendant la phase de branchement du convertisseur de tension symétrique (GW).

10. Dispositif de limitation de courant selon l'une des revendications 4 à 9,
caractérisé par, une inductance (L1) entre la sortie du pré-régleur (VR) et l'entrée du convertisseur de tension continue symétrique (GW).

11. Dispositif de limitation de courant selon l'une des revendications 4 à 10,
caractérisé en ce que, le temps de la coupure du convertisseur de tension continue symétrique (GW) est plus long que la durée d'un cycle de commutation du convertisseur de tension continue symétrique (GW).

Fig. 1

Fig.2

EP 0 581 172 B1

Fig. 3